**Europäisches Patentamt**

**European Patent Office**

**Office européen des brevets**

(11) Numéro de publication: **0 261 046**
**A1**

## (12) DEMANDE DE BREVET EUROPEEN

(21) Numéro de dépôt: **87430029.6**

(22) Date de dépôt: **30.06.87**

(51) Int. Cl.4: **C 02 F 3/04**
**C 02 F 3/10**

(30) Priorité: **30.06.86 FR 8609575**

(43) Date de publication de la demande:
**23.03.88 Bulletin 88/12**

(84) Etats contractants désignés: **ES GR IT**

(71) Demandeur: **DECADES**
**1, rue Francois Moisson**
**F-13002 Marseille (FR)**

(72) Inventeur: **Lopez, Michel**
**99, rue de Lodi**
**F-13006 Marseille (FR)**

(54) Procédé de filtration biologique d'effluents concentrés en matières organiques.

(57) Le procédé de filtration aérobie des eaux de végétations d'undustries agro-alimentaires est séparé en deux colonnes qui jouent chacune le rôle d'une étape de la "loi d'oxydation biologique" des matières organiques.

Le premier filtre dont l'objectif est de fabriquer un maximum de micro-organismes qui remplacent la pollution dissoute vise un haut rendement biotechnologique de croissance de cellules et peut recevoir 50 à 80 kg de DBO5 (m3/j) soit 50 fois plus qu'un filtre classique.

Une recirculation répétée sur la colonne apporte l'air utile à la réaction. Il faut adjoindre à cette étape une centrifugeuse pour séparer l'abondante production de boue, mais cette contrainte a des avantages ultérieurs.

La forte charge admise sur ce premier filtre réduit son dimensionnement et permet de le loger dans un local chauffé de l'usine afin d'optimiser, en ambiance favorable, le développement cellulaire en quelques heures.

Le deuxième filtre reçoit le centrifugeat débarrassé de près de 80 % de la pollution et, sur des bases épuratoires, sert de filtre bactérien pour ôter encore 75 % de la pollution qu'il admet en amont. Après décantation, l'effluent épuré est livrable à l'égoût.

La précédente description d'un savoir-faire se complète par la mise en oeuvre d'une installation caractérisée par sa rusticité car le garnissage des filtres est fait de morceaux de liège de rebus auxquels il peut être substitué quelqu'autre matière tout aussi imputrescible et tout aussi légère permettant de ne pas faire de colonnes à enveloppes de soutien en génie civil, mais en modules grillagés, empilés et démontables en fin de campagne de production.

Bundesdruckerei Berlin

## Description

## PROCEDE DE FILTRATION BIOLOGIQUE D'EFFLUENTS CONCENTRES EN MATIERES ORGANIQUES

La présente invention concerne les dispositifs permettant d'augmenter les performances d'épuration par percolation des jus et effluents, non fermentés, d'industries agro-alimentaires traitant les fruits et légumes.

Négligés pour leur rusticité, les filtres biologiques n'ont pas connu une utilisation approfondie et ce sont leurs augmentations de performances, économisant l'énergie de traitement, qui sont ici revendiquées.

Pour une première différenciation avec des filtres connus, le matériau de garnissage est du liège de rebus calibré en morceaux de 40 à 80 mm pour former des modules grillagés, cubiques, facilement gerbables en colonnes évitant tout génie civil. Le liège de rebus trouve un débouché noble pouvant se substituer aux matières plastiques de plus en plus proposées pour le garnissage des filtres.

De plus, le procédé revendiqué réalise le traitement des liquides organiques en deux étapes, soit deux filtres dimensionnés pour séparer deux réactions importantes de la "loi d'oxydation biologique" :
- la formation de cellules extractibles,
- l'auto-oxydation de l'effluent résultant.

Le traitement traditionnel utilisé pour l'épuration des eaux contient certes ces réactions, mais ce qui était visé c'était la formation minimale de boues en appliquant des charges volumiques, sur les filtres, ne dépassant pas 10 à 15 kg de DBO5 par m3 de matériaux, car aller au-delà décourageait de la finalité. Dans le cas présent, la charge est considérablement augmentée sur le premier filtre et atteint 50 à 80 kg par m3. Il en résulte donc une formation abondante de cellules de levures enveloppées de substances de réserves colloïdales qui sont des polymères des sucres présents dans l'effluent à traiter. L'extraction des ces boues gélatineuses ne pouvant se réaliser par des moyens simples de décantation, de flottation ou de tamisage conduit à utiliser une décanteuse centrifuge. Une destination étant trouvée aux boues, leur volume n'est plus considéré comme une contrainte d'exploitation.

La première étape du procédé préconisé introduite à l'intérieur de bâtiments chauffés en hiver aboutit à une épuration de 80 % du liquide à centrifuger. Le deuxième filtre prend donc en charge l'épuration des 20 % de la pollution restante par le maximum d'auto-oxydation, à une charge volumique de 5 kg de DBO5 par m3 de matériau de garnissage, et une fois cette deuxième production de boue réalisée on obtient un rendement complémentaire de 80 % sur le centrifugeat.

Donc, l'épuration à 96 % d'effluents agro-alimentaires très chargés est réalisable avec deux filtres en série de dimensions réduites permettant des économies d'énergie pour l'aération nécessaire et dont l'exploitation automatisable n'est pas exclue.

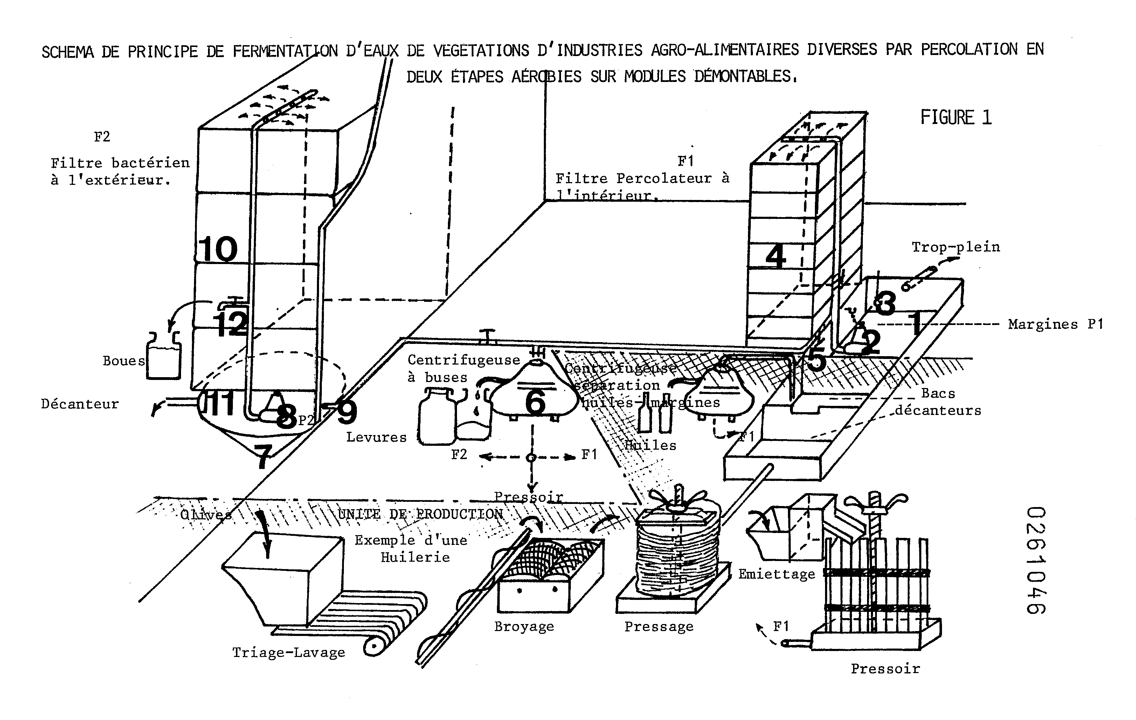

Description de l'installation : afin de satisfaire au mieux la majorité des unités industrielles, qui ont des activités journalières entrecoupées par des arrêts nocturnes, la procédé proposé (fig.1) consiste à réceptionner les eaux quotidiennes dans une fosse (1) capable de les contenir et de les relever par une pompe (2) dès qu'un niveau minimum (3) est atteint. Cette pompe immergée, imbouchable, d'un débit horaire voisin du volume journalier produit, permettra plusieurs passages de percolation sur colonne de liège en revenant gravitairement au stock initial. Les 24 heures exploitables, pour atteindre un haut rendement de formations cellulaires au dépend de la matière organique soluble, sont intéressantes à considérer pour prévoir la place du lendemain.

En quelques heures par jour, la pollution est matérialisée en cellules et le reste du cycle diurne servira aisément à programmer l'ouverture d'une électrovanne (5) pour réaliser la séparation de tout le liquide pompé sur une centrifugeuse (6) à extraction continue des boues. Le centrifugeat s'écoulera vers un traitement de finition à l'extérieur.

Pour répondre au problème des unités industrielles rejettant des eaux 24 heures sur 24, le besoin de quelques heures sans apport d'effluent brut serait appréciable mais pas impératif pour arriver à un réglage convenable. L'aménagement adéquat pour créer la discontinuité pourra facilement être résolu en cloisonnant la fosse de stockage en deux parties, mises en parallèle, et une alimentation sucessive des deux compartiments comportant chacun leur pompe et leur colonne de filtration.

Le liquide centrifugé s'écoule, en une seule opération, de la centrifugeuse vers le décanteur extérieur (7) ou peut retourner à la première fosse dans le but de diluer l'arrivée et rentabiliser des centrifugations fractionnées.

Ce décanteur (7) de préférence conique ou hémiconique stocke l'effluent quotidien et est équipé dans son fond d'une pompe (8) permettant par son débit horaire de recycler plus de 10 fois sur une colonne (10) garnie de morceaux de liège calibrés. Les eaux épurées se déversent par trop plein du décanteur à l'égoût chaque fois qu'une arrivée amont (9) s'effectue. Contre l'éventualité de rejets accidentels de flottants, une cloison siphoïde (11) est mise en place.

Les boues qui se décrochent du filtre se déposent dans le bas du décanteur et leur extraction périodique est permise quand on ouvre la vanne (12) de la dérivation sur le recyclage.

Il résulte de la description qui précède qu'il sera adjoint une armoire électrique de commande pour programmer au maximum l'ensemble des tâches du traitement découlant d'un savoir-faire qui optimise les performances d'épuration du procédé.

## Revendications

1) Procédé de filtration biologique des effluents très chargés des industries agro-alimentaires consistant :
- en la mise en série de deux colonnes (4) et (10) garnies en en matériaux calibrés de 40 à 80 mm au travers desquelles percolent plusieurs fois le liquide pris dans les fosses (1) et (7) respectivement sous les filtres (4) et (10) à l'aide de leur pompe (2) et (8)

- en l'installation de la première colonne (4) dans un local chauffé pour optimiser et contrôler la croissance exponentielle des micro-organismes et pouvoir ainsi extraire par la centrifugeuse (6) 70 % de la pollution journalière sous forme de levures. Le volume de la colonne (4) recevant par jour 50 kg à 80 kg de $DBO_5$ par $m^3$ de matériau en vrac est de ce fait restreint à une capacité 50 fois moindre que des filtres classiques placés à l'extérieur aux aléas des conditions météorologiques.

- en l'utilisation de la deuxième colonne (10) pour parfaire l'épuration des effluents et dont le dimensionnement sera limité car se calculant sur les 30 % de pollution résiduelle de laquelle la part carbonée a été fortement extraite par la centrifugeuse (6) et génére une faible quantité de boues qui acquièrent maintenant la propriété de décanter dans la fosse (7) d'où elle sera extraite.

2) Le procédé, selon la revendication 1, caractérisé en ce que le garnissage des filtres (4) et (10) est composé de liège de rebus, ou de tout autre composant aux mêmes caractéristiques d'imputrescibilité et de faible densité pour permettre la réalisation de colonnes (4) et (10) exemptes de génie civil.

3) Procédé selon la revendication 1 ou 2 caractérisée en ce que les colonnes (4) et (10) en structures métalliques légères sont des empilements de modules grillagés contenant le matériau filtrant aisément manipulables en toute sécurité par deux manoeuvres sans intervention d'engins de levage.

4) Pocédé selon la revendication 1, 2 ou 3 caractérisée en ce que, le dit matériau de garnissage des colonnes (4) et (10),contient en fin de campagne un encrassement bactérien et d'éléments minéraux colloïdaux permettant au broyat de l'ensemble de devenir un substrat horticole à excellent pouvoir de rétention d'eau.

SCHEMA DE PRINCIPE DE FERMENTATION D'EAUX DE VEGETATIONS D'INDUSTRIES AGRO-ALIMENTAIRES DIVERSES PAR PERCOLATION EN DEUX ÉTAPES AÉROBIES SUR MODULES DÉMONTABLES.

FIGURE 1

F2
Filtre bactérien à l'extérieur.

F1
Filtre Percolateur à l'intérieur.

Trop-plein

Margines P1

Boues

Décanteur

Bacs décanteurs

Centrifugeuse à buses

Centrifugeuse séparation huiles-margines

Levures

Huiles

F2

F1

Pressoir

UNITE DE PRODUCTION

Olives

Exemple d'une Huilerie

Broyage

Pressage

Emiettage

F1

Triage-Lavage

Pressoir

0261046

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 227 585 (THE DISTILLERS CO.) <br> * Page 1, lignes 18-49 * <br><br> --- | 1 | C 02 F 3/04 <br> C 02 F 3/10 |
| Y | GB-A-1 601 350 (ASAHI DENKA) <br> * Page 6, revendications 1,4; page 2, lignes 10-25 * <br><br> --- | 1 | |
| Y | GB-A- 469 300 (INTERNATIONALE SUIKER) <br> * Page 2, revendications 1-4; page 1, lignes 77-97 * <br><br> --- | 1 | |
| Y | LEHR- UND HANDBUCH DER ABWASSERTECHNIK, 3ième édition, vol. 4, Biologisch-chemische und weitergehende Abwasserreinigung, 1985, pages 109-138, Abwassertechnischen Vereinigung e.V. in St. Augustin, Verlag für Architektur und technische Wissenschaften, Berlin, DE <br> * Page 109, paragraphe 2.5.2.1.2: "Rasenstärke"; pages 134-138, paragraphe 2.5.2.4.1: "Der Wärmehaushalt im Tropfkörper", paragraphe 2.5.2.4.2: "Einfluss der Temperatur auf die Reinigungsleistung" * <br><br> ---     -/- | 1 | DOMAINES TECHNIQUES RECHERCHES (Int. Cl.4) <br><br> C 02 F |

Le présent rapport de recherche a été établi pour toutes les revendications

| Lieu de la recherche <br> LA HAYE | Date d'achèvement de la recherche <br> 24-09-1987 | Examinateur <br> TEPLY J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 395 957  (ENSO-GUTZEIT OSAKEYHTIO)<br>* Page 3, lignes 19-21; page  16, revendication 1 * | 1,2 | |
| A | US-A-4 086 167  (ENSO-GUTZEIT OSAKEYHTIO)<br>*  Page de garde, abrégé; colonne 3, lignes 27-31 * | 1,2 | |
| A | FR-A- 751 483  (LE BUREAU TECHIQUE D'HYGIENE)<br>* Page 1, lignes  1-28;  page  1, ligne 47 - page 2, ligne 60 * | 1,3 | |
| A | CH-A- 191 248  (E. MAIER)<br>*  Page  1,  alinéa  2  - page 2, alinéa 2 * | 1,3,4 | DOMAINES TECHNIQUES RECHERCHES (Int. Cl.4) |

Le présent rapport de recherche a été établi pour toutes les revendications

| Lieu de la recherche<br>LA HAYE | Date d'achèvement de la recherche<br>24-09-1987 | Examinateur<br>TEPLY J. |
|---|---|---|